# FASCICULE DE BREVET EUROPEEN

(11) **EP 3 670 867 B1**
(45) Date de publication et mention de la délivrance du brevet: **13.10.2021**
(21) Numéro de dépôt: 19215909.3
(22) Date de dépôt: 13.12.2019
(51) Int. Cl.: F02C 7/236

(54) **DISPOSITIF AMÉLIORÉ DE RÉGULATION DE DÉBIT D'ALIMENTATION**
VERBESSERTE VORRICHTUNG ZUR REGULIERUNG DES VERSORGUNGSDURCHSATZES
IMPROVED DEVICE FOR REGULATING A POWER SUPPLY FLOW

(30) Priorité: 17.12.2018 FR 1873060
(43) Date de publication de la demande: 24.06.2020
(73) Titulaire: SAFRAN AIRCRAFT ENGINES, 75015 Paris (FR)
(72) Inventeur: AOUNALI, Abdallah, 77550 MOISSY-CRAMAYEL (FR); TOMOV, Petar, 77550 MOISSY-CRAMAYEL (FR)
(74) Mandataire: Cabinet Beau de Loménie

(56) Documents cités:
- WO-A1-2018/115653
- US-A- 4 512 722
- US-A- 5 490 387

## Description

### Domaine Technique

La présente invention concerne le domaine des circuits d'alimentation carburant pour moteur, et notamment pour turbomachines, et concerne plus particulièrement un dispositif de régulation de débit d'alimentation en carburant, et un procédé de régulation utilisant un tel dispositif, dans lequel s'écoule un écoulement diphasique.

La présente invention peut notamment être utilisée pour un turboréacteur d'avion.

### Technique antérieure

Les moteurs d'avions comportent classiquement des circuits d'alimentation en carburant, prélevant du carburant dans des réservoirs situés généralement dans les ailes de l'avion. Au cours de son trajet depuis ces réservoirs jusqu'au moteur, le carburant s'écoule tout d'abord dans une conduite issue de ces réservoirs et appartenant à l'avion puis dans une conduite appartenant au circuit d'alimentation du moteur. La jonction entre ces deux conduites constitue donc une interface entre l'avion et le moteur. Par ailleurs, les circuits d'alimentation de ces moteurs comportent un équipement de pompage permettant de pressuriser le carburant avant son alimentation dans la chambre de combustion. Cet équipement de pompage comporte généralement deux étages : une pompe BP (basse pression), et une pompe HP (haute pression). La pompe BP est généralement une pompe centrifuge avec rouet à aubages, dont le bon fonctionnement dépend fortement de sa bonne alimentation en carburant. En particulier, ce type de pompe étant prévu pour fonctionner avec des fluides en phase liquide, la présence de gaz dans l'écoulement de carburant risque d'altérer le bon fonctionnement de la pompe.

Le document WO2018/115653 A1 décrit un dispositif de régulation de débit d'alimentation en carburant de l'art antérieur.

Or, lors de la fabrication d'un moteur, les motoristes ne connaissent pas nécessairement précisément les conditions de fonctionnement auxquelles ce moteur sera soumis en vol et, en particulier, ne connaissent pas nécessairement les détails de conception des réservoirs et des canalisations carburant de l'avion. Inversement, les avionneurs ne connaissent pas nécessairement le type de moteur qui sera utilisé sur un avion donné, plusieurs modèles de moteurs étant généralement compatibles pour un même modèle d'avion. Il en résulte une méconnaissance des conditions d'écoulement existant à l'interface entre l'avion et le moteur. Or, en fonction de la configuration de l'avion et de ses conditions d'utilisation (géométrie des canalisations, altitude, type de carburant, température...), les caractéristiques de l'écoulement à cette interface peuvent être perturbées. Les conséquences peuvent être notamment le dégazage, ou encore la cavitation, ainsi que le couplage des deux phénomènes qui apparaissent lorsque la pression de l'écoulement devient trop faible. Les écoulements diphasiques ainsi obtenus comportent alors des microbulles, des bulles ou des poches complètes de gaz risquant de perturber le fonctionnement de la pompe BP, voire de l'endommager, et ainsi d'induire des dysfonctionnements du moteur.

Ces régimes d'écoulement peuvent être nuisibles au bon fonctionnement de la pompe, et donc du moteur. En effet, dans ces types de régimes, la pompe BP peut être ponctuellement alimentée par un fluide essentiellement sous phase gazeuse. Cette configuration peut notamment mener au désamorçage de la pompe, ou encore donner lieu à des vibrations, ainsi qu'à l'apparition d'un phénomène de pompage pouvant endommager la pompe.

Afin d'éviter ces types de régimes d'écoulements, il serait nécessaire de simuler et donc de spécifier correctement les conditions d'alimentation du carburant au niveau de l'interface entre l'avion et le moteur au cours du vol. Or, comme cela a été évoqué ci-dessus, les motoristes disposent rarement des informations suffisantes, notamment en ce qui concernant la configuration exacte de l'avion, pour rendre possibles de telle simulations. Par conséquent, les solutions actuelles visant à éviter ces régimes d'écoulements se contentent de limiter le domaine de vol afin d'éviter tout risque d'avoir une pression trop faible (favorisant le phénomène de cavitation) au niveau de l'interface entre l'avion et le moteur, ou encore surdimensionnent la pompe BP, ce qui a pour conséquence d'augmenter inutilement la masse de l'ensemble propulsif.

Il existe donc un besoin pour un dispositif de régulation de débit d'alimentation en carburant et un procédé de régulation du débit, permettant de limiter les inconvénients précités.

### Exposé de l'invention

Le présent exposé concerne un dispositif de régulation de débit d'alimentation en carburant pour une turbomachine, comprenant :
- au moins une pompe,
- une canalisation amont menant à la pompe,
- une canalisation aval sortant de la pompe,
- un canal de recirculation connecté en dérivation de la canalisation aval, permettant de prélever une certaine quantité de fluide dans la canalisation aval et d'acheminer le fluide prélevé dans la canalisation aval vers la canalisation amont,
- un moyen de réglage de débit disposé sur le canal de recirculation,
- un mesureur de phases apte à déterminer la teneur en gaz d'un écoulement diphasique disposé dans la canalisation amont,
- une unité de calcul connectée au mesureur de phases et au moyen de réglage de débit, ladite unité de calcul étant configurée pour commander le moyen de réglage de débit de manière à commander un degré d'ouverture de celui-ci, en fonction de la valeur de la teneur en gaz dans la canalisation amont déterminée par le mesureur de phases.

Dans le présent exposé, l'écoulement peut être un écoulement d'un liquide, ou un écoulement diphasique, c'est-à-dire un écoulement d'un fluide comportant une phase liquide et une phase gazeuse comportant la vapeur du liquide et de l'air initialement dissous dans le liquide, et les termes « amont » ou « aval », sont compris suivant le sens d'écoulement du fluide dans le circuit carburant (partant du réservoir de carburant vers la chambre de combustion).

La variation du degré du moyen de réglage de débit correspond à une variation de la section de passage du fluide dans le canal de recirculation.

Par « teneur en gaz », on comprend la proportion totale volumique de la phase gazeuse dans l'ensemble du fluide sur une portion de la canalisation amont.

La valeur de la teneur en gaz dans la canalisation amont détectée par le mesureur de phases, détermine le degré d'ouverture du moyen de réglage de débit, en d'autres termes, le débit de fluide circulant dans le canal de recirculation et réinjecté dans la canalisation amont.

Ce dispositif permet d'ajuster le débit de fluide alimentant la pompe directement en amont de celle-ci. Grâce à ce dispositif, il est ainsi possible d'éviter des régimes d'écoulements pouvant nuire au fonctionnement du moteur, en détectant l'apparition de tels régimes et en modifiant simplement le débit de l'écoulement. Cela est possible sans qu'il soit nécessaire, dans le cas d'un moteur d'avion, de limiter le domaine de vol. Par ailleurs, un tel dispositif permet de se dispenser de surdimensionner la pompe, ce qui permet donc d'éviter d'augmenter sa masse et son encombrement. En outre, ce dispositif de régulation de débit permet de corriger la présence de la phase gazeuse sur toute la plage de fonctionnement, et quelle que soit la valeur de la teneur en phase gazeuse.

Dans certains modes de réalisation, le moyen de réglage de débit comprend un premier organe de réglage connecté à l'unité de calcul, et un deuxième organe de réglage disposé sur le canal de recirculation, le degré d'ouverture du deuxième organe de réglage étant commandé par le premier organe de réglage.

Dans certains modes de réalisation, lorsque la valeur de la teneur en gaz dans la canalisation amont augmente, l'unité de calcul est configurée pour commander la fermeture au moins partielle du deuxième organe de réglage, par l'intermédiaire du premier organe de réglage, de manière à diminuer le débit de circulation de carburant s'écoulant dans le canal de recirculation.

Dans certains modes de réalisation, le canal de recirculation est connecté à la canalisation amont, en aval du mesureur de phases.

Le fluide prélevé dans la canalisation aval et circulant dans le canal de recirculation est ainsi injecté dans la canalisation amont en aval du mesureur de phases, directement en amont de la pompe. Par « directement en amont », on comprend que le point de connexion entre le canal de dérivation et la canalisation amont, et la pompe, sont reliées uniquement par une portion de la canalisation amont, aucun autre élément du dispositif n'étant disposé sur cette portion.

Dans certains modes de réalisation, le premier organe de réglage est une servovalve, et le deuxième organe de réglage est un clapet de recirculation.

Par « servovalve », on comprend une valve hydraulique à ouverture commandée électriquement, permettant l'asservissement de son ouverture, plus particulièrement l'ouverture du clapet de recirculation (ou vanne de régulation). Par ailleurs, la variation du degré d'ouverture du clapet de recirculation correspond à une variation de la section de passage du fluide dans le canal de recirculation.

Dans certains modes de réalisation, la pompe basse pression est une pompe centrifuge avec rouet à aubages.

Le présent exposé concerne également une turbomachine comprenant au moins un dispositif selon l'un quelconque des modes de réalisation précédents.

Le présent exposé concerne également un procédé de régulation de débit d'alimentation en carburant pour une turbomachine utilisant le dispositif selon l'un quelconque des modes de réalisation précédents, comprenant des étapes de : détermination, dans la canalisation amont, de la teneur en gaz d'un écoulement alimentant la pompe par le mesureur de phases ; et de réglage du degré d'ouverture du moyen de réglage de débit par l'intermédiaire du calculateur en fonction de la teneur en gaz dans la canalisation amont, déterminée à l'étape de détermination.

Dans certains modes de réalisation, lorsque le mesureur de phases détecte une augmentation de la phase gazeuse à l'étape de détermination, le calculateur commande la fermeture au moins partielle du moyen de réglage de débit de manière à diminuer le débit de circulation de carburant s'écoulant dans le canal de recirculation.

### Brève description des dessins

L'invention et ses avantages seront mieux compris à la lecture de la description détaillée faite ci-après d'un exemple de réalisation de l'invention donnés à titre non limitatifs. Cette description fait référence aux figures annexées, sur lesquelles :
[Fig. 1] la figure 1 représente un aéronef comportant un circuit d'alimentation selon le présent exposé ;
[Fig. 2] la figure 2 représente schématiquement un tel circuit d'alimentation ;
[Fig. 3] la figure 3 représente, de manière modélisée, une canalisation dans laquelle s'écoule un fluide en présence de phase gazeuse, à l'entrée d'une pompe ;
[Fig. 4] la figure 4 représente un mesureur de phases.

### Description des modes de réalisation

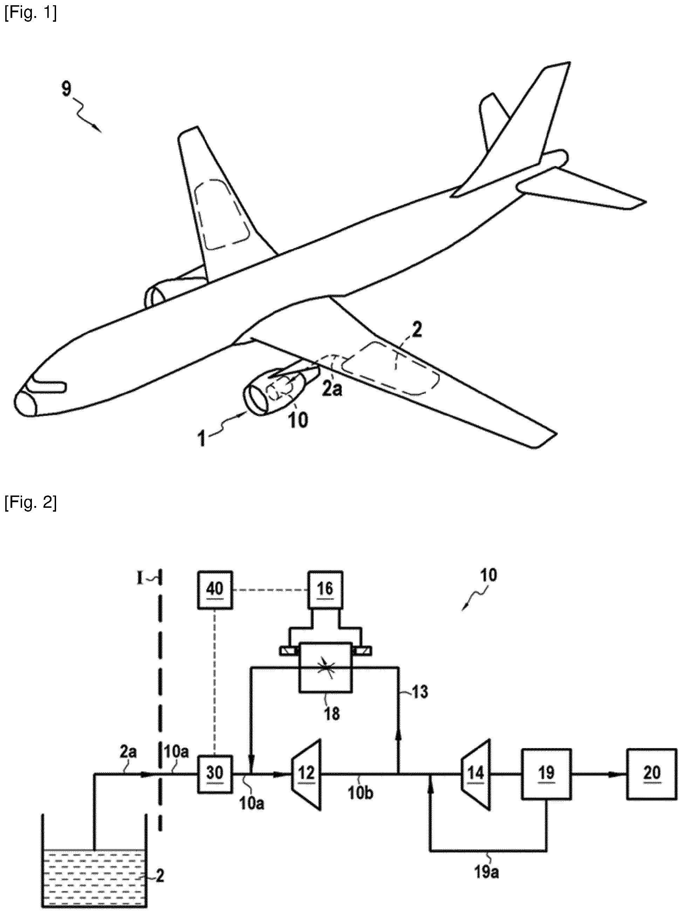

La figure 1 représente un aéronef 9 comportant un moteur 1 et un réservoir de carburant 2 disposé dans une aile de l'aéronef 9. Le moteur 1 comporte un dispositif de régulation de débit d'alimentation en carburant, le dispositif de régulation étant un circuit d'alimentation 10 alimenté par le carburant prélevé dans le réservoir 2. Au cours de son trajet depuis le réservoir 2 jusqu'au moteur 1, le carburant s'écoule tout d'abord dans une conduite de réservoir 2a issue du réservoir 2 et appartenant à l'aéronef 9, puis dans une conduite 10a appartenant au circuit d'alimentation 10 du moteur 1. La jonction entre ces deux conduites 2a et 10a constitue une interface I entre l'aéronef 9 et le moteur 1.

Le circuit d'alimentation 10 est représenté schématiquement sur la figure 2. Il comporte un équipement de pompage permettant de pressuriser le carburant avant son alimentation dans la chambre de combustion 20. Cet équipement de pompage comporte une première pompe 12 (pompe basse pression), et une deuxième pompe 14 (pompe haute pression). Les flèches sur la figure 2 représentent le sens d'écoulement du carburant. La conduite 10a est une canalisation amont, dans laquelle circule le carburant provenant du réservoir 2, et menant à la première pompe 12. La première pompe 12 débouche sur une canalisation aval 10b, dans laquelle circule le carburant jusqu'à la deuxième pompe 14, à laquelle la canalisation aval 10b est connectée. Le carburant sortant de la deuxième pompe 14 alimente ensuite un doseur 19, puis les injecteurs de carburant de la chambre de combustion 20 du moteur 1. La partie de fluide prélevée par le doseur 19 en aval de la deuxième pompe 14, est réacheminé en amont de la deuxième pompe 14 par l'intermédiaire d'une canalisation de dosage 19a.

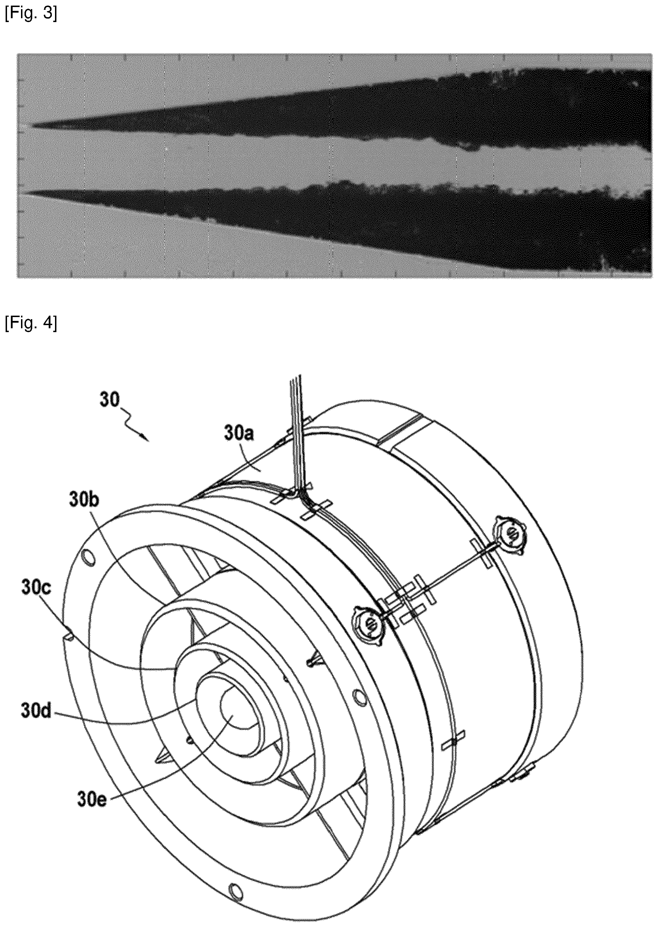

Un mesureur de phases 30 est disposé dans la canalisation amont 10a, en aval de l'interface I. Comme cela est représenté sur la figure 4, le mesureur de phases 30 comporte une enveloppe cylindrique 30a, à l'intérieur de laquelle est disposée une pluralité d'électrodes 30b, 30c, 30d, 30e cylindriques et concentriques entre elles et avec l'enveloppe cylindrique 30a. Le fluide s'écoulant dans la canalisation amont 10a s'écoule à l'intérieur du mesureur de phases 30, le long de ces électrodes. Les électrodes permettent de mesurer une capacité électrique dont la valeur est représentative de la teneur en gaz du fluide s'écoulant dans le mesureur de phases 30.

Le circuit d'alimentation 10 comporte en outre un canal de recirculation 13. Le canal de recirculation 13 permet de prélever une certaine quantité de carburant dans la canalisation aval 10b. Le canal de recirculation 13 est branché en dérivation sur la canalisation aval 10b, entre la première pompe 12 et la deuxième pompe 14. Le canal de recirculation 13 est également branché sur la canalisation amont 10a, en amont de la première pompe 12 et en aval du mesureur de phases 30.

En outre, un clapet de recirculation 18 est disposé sur le canal de recirculation 13. L'ouverture du clapet de recirculation 18 est commandée par une servovalve 16. La servovalve 16 commande le degré d'ouverture du clapet de recirculation 18, en d'autres termes, le débit de fluide s'écoulant dans le canal de recirculation 13, vers la canalisation amont 10a.

Une unité de calcul 40 est connectée au mesureur de phases 30 et à la servovalve 16. L'unité de commande 40 peut être de type FADEC (pour « Full Authority Digital Engine Control » en anglais). La teneur en gaz du fluide s'écoulant dans la canalisation amont 10a, mesurée par le mesureur de phases 30, est transmise à l'unité de calcul 40. En fonction de cette valeur de la teneur en gaz, l'unité de calcul 40 envoie un signal correspondant à la servovalve 16 qui commande un degré d'ouverture du clapet de recirculation 18, selon le procédé décrit par la suite.

La première pompe 12 est une pompe centrifuge avec rouet à aubages, avec ou sans inducteur à aubages en amont dudit rouet. Le principe de fonctionnement de cette pompe centrifuge est décrit ci-dessous.

Sur la pompe centrifuge, la transmission de l'énergie se fait de manière hydrodynamique. Lors de la transmission hydrodynamique de l'énergie, le fluide est accéléré par la roue de la pompe centrifuge. Le travail transmis au fluide, et donc l'augmentation de pression, est calculé à partir des vitesses sur la roue, entre la vitesse en entrée de l'aubage et la vitesse en sortie de l'aubage.

Les performances de la roue dépendent donc fortement du triangle de vitesse en entrée de la pompe. En effet, l'angle d'entrée d'un aubage d'une pompe centrifuge est conçu de façon à guider le fluide en rotation pour une plage de débit donnée. La présence de la phase gazeuse en entrée de la pompe, impacte de façon directe le triangle de vitesse en entrée de la roue, et donc les performances de la pompe.

En présence de la phase gazeuse, la section de passage effective de carburant (illustrée par la portion grise sur la figure 3) se voit réduite du fait de l'occupation de la section par la phase gazeuse (illustrée par les portions noires de part et d'autres de la portion grise).

Une conservation du débit de la pompe dans ces conditions, implique une augmentation de la vitesse du carburant afin de compenser la réduction de section.

La vitesse Cᵤ₁ en entrée de l'aubage se voit donc augmentée comme suit : C'ᵤ₁ = Cᵤ₁ *(1 + V/L), où V/L représente le rapport de la fraction gazeuse sur la fraction liquide. Si cette augmentation de vitesse devient trop importante, elle peut engendrer une incidence non adaptée à l'angle d'aubage en entrée, réduisant fortement les performances et engendrant des phénomènes de types décollement, recirculation et cavitation.

Le dispositif selon le présent exposé consiste à utiliser le mesureur de phases 30 en amont de la pompe basse pression 12 afin de réguler la vitesse Cᵤ₁ en entrée de l'aubage et optimiser les performances de la pompe, quelle que soit le ratio V/L, et sur toute la plage de fonctionnement en débit. Il est également possible de bloquer le passage du fluide à l'entrée de la pompe basse pression 12.

En d'autres termes, au lieu de dimensionner la pompe sur une plage de débit donnée Q, la pompe basse pression 12 est dimensionnée pour la même plage augmentée comme suit : Q_{dim} = Q *(1 + V/L).

En l'absence de phase vapeur, c'est-à-dire V/L = 0, la boucle de recirculation assure la redirection du surplus de débit à l'entrée de la pompe 12.

En présence de phase vapeur, c'est-à-dire V/L > 0, le mesureur de phases 30 transmet la valeur V/L au calculateur 40 qui va commander la servovalve 16, qui commande à son tour le clapet de recirculation 18. Ce dernier diminue alors la section de passage du canal de recirculation 13. Le débit de recirculation s'écoulant dans le canal de recirculation est donc diminué, de même que la vitesse Cᵤ₁ (avec le rapport V/L). On obtient ainsi une vitesse Cᵤ₁ en entrée de la pompe toujours cohérente avec l'angle d'attaque de l'aubage d'entrée de la pompe basse pression.

Lorsque le mesureur de phases 30 détecte une valeur donnée V/L, le point de fonctionnement est alors légèrement décalé. Pour ce faire, l'ouverture du clapet de recirculation est réduite afin de diminuer le débit carburant et sortir du point critique.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que l'étage basse pression de la pompe 12 peut comporter une volute. Le comportement de la pompe lorsque V/L>0 n'est en aucun cas influencé par la présence de ladite volute.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Dispositif (10) de régulation de débit d'alimentation en carburant pour une turbomachine, comprenant :
- au moins une pompe (12),
- une canalisation amont (10a) menant à la pompe (12),
- une canalisation aval (10b) sortant de la pompe (12),
- un canal de recirculation (13) connecté en dérivation de la canalisation aval (10b), permettant de prélever une certaine quantité de fluide dans la canalisation aval (10b) et d'acheminer le fluide prélevé dans la canalisation aval (10b) vers la canalisation amont (10a),
- un moyen de réglage de débit (16, 18) disposé sur le canal de recirculation (13),
- un mesureur de phases (30) apte à déterminer la teneur en gaz d'un écoulement diphasique disposé dans la canalisation amont (10a), le canal de recirculation (13) étant connecté à la canalisation amont (10a), en aval du mesureur de phases (30),
- une unité de calcul (40) connectée au mesureur de phases (30) et au moyen de réglage de débit (16, 18), ladite unité de calcul (40) étant configurée pour commander le moyen de réglage de débit (16, 18) de manière à commander un degré d'ouverture de celui-ci, en fonction de la valeur de la teneur en gaz dans la canalisation amont (10a) déterminée par le mesureur de phases (30).

2. Dispositif (10) selon la revendication 1, dans lequel le moyen de réglage de débit (16, 18) comprend un premier organe de réglage (16) connecté à l'unité de calcul (40), et un deuxième organe de réglage (18) disposé sur le canal de recirculation (13), le degré d'ouverture du deuxième organe de réglage (18) étant commandé par le premier organe de réglage (16).

3. Dispositif (10) selon la revendication 2, dans lequel, lorsque la valeur de la teneur en gaz dans la canalisation amont (10a) augmente, l'unité de calcul (40) est configurée pour commander la fermeture au moins partielle du deuxième organe de réglage (18), par l'intermédiaire du premier organe de réglage (16), de manière à diminuer le débit de circulation de carburant s'écoulant dans le canal de recirculation (13).

4. Dispositif (10) la revendication 2 ou 3, dans lequel le premier organe de réglage (16) est une servovalve, et le deuxième organe de réglage (18) est un clapet de recirculation.

5. Dispositif (10) selon l'une quelconque des revendications 1 à 4, dans laquelle la pompe (12) est une pompe centrifuge avec rouet à aubages.

6. Turbomachine comprenant au moins un dispositif (10) selon l'une quelconque des revendications précédentes.

7. Procédé de régulation de débit d'alimentation en carburant pour une turbomachine utilisant le dispositif (10) selon l'une quelconque des revendications 1 à 5, comprenant des étapes de:
- détermination, dans la canalisation amont (10a), de la teneur en gaz d'un écoulement alimentant la pompe (12) par l'intermédiaire du mesureur de phases (30) ;
- réglage du degré d'ouverture du moyen de réglage de débit (16, 18) par l'intermédiaire du calculateur (40) en fonction de la teneur en gaz dans la canalisation amont (10a), déterminée à l'étape de détermination.

8. Procédé selon la revendication 7, dans lequel, lorsque le mesureur de phases (30) détecte une augmentation de la phase gazeuse à l'étape de détermination, le calculateur (40) commande la fermeture au moins partielle du moyen de réglage de débit (16, 18) de manière à diminuer le débit de circulation de carburant s'écoulant dans le canal de recirculation (13).

## Patentansprüche

1. Vorrichtung (10) zur Regulierung des Durchsatzes der Kraftstoffversorgung für ein Turbinentriebwerk, die umfasst:
- mindestens eine Pumpe (12),
- eine stromaufwärtige Leitung (10a), die zur Pumpe (12) führt,
- eine stromabwärtige Leitung (10b), die aus der Pumpe (12) austritt,
- einen Rückführungskanal (13), der als Abzweigung der stromabwärtigen Leitung (10b) verbunden ist und es ermöglicht, eine gewisse Menge an Fluid in der stromabwärtigen Leitung (10b) zu entnehmen und das in der stromabwärtigen Leitung (10b) entnommene Fluid zur stromaufwärtigen Leitung (10a) zu befördern,
- ein Mittel (16, 18) zur Regulierung des Durchsatzes, das an dem Rückführungskanal (13) angeordnet ist,
- einen Phasenmesser (30), der geeignet ist, den Gasgehalt einer zweiphasigen Strömung zu bestimmen und in der stromaufwärtigen Leitung (10a) angeordnet ist, wobei der Rückführungskanal (13) stromabwärts des Phasenmessers (30) mit der stromaufwärtigen Leitung (10a) verbunden ist,
- eine Recheneinheit (40), die mit dem Phasenmesser (30) und mit dem Mittel (16, 18) zur Regulierung des Durchsatzes verbunden ist, wobei die Recheneinheit (40) dazu ausgestaltet ist, das Mittel (16, 18) zur Regulierung des Durchsatzes derart zu steuern, dass ein Öffnungsgrad davon in Abhängigkeit von dem durch den Phasenmesser (30) bestimmten Gasgehalt in der stromaufwärtigen Leitung (10a) gesteuert wird.

2. Vorrichtung (10) nach Anspruch 1, wobei das Mittel (16, 18) zur Regulierung des Durchsatzes ein erstes Regulierungsorgan (16), das mit der Recheneinheit (40) verbunden ist, und ein zweites Regulierungsorgan (18) umfasst, das an dem Rückführungskanal (13) angeordnet ist, wobei der Öffnungsgrad des zweiten Regulierungsorgans (18) durch das erste Regulierungsorgan (16) gesteuert wird.

3. Vorrichtung (10) nach Anspruch 2, wobei die Recheneinheit (40) dazu ausgestaltet ist, wenn der Wert des Gasgehalts in der stromaufwärtigen Leitung (10a) zunimmt, das zumindest partielle Schließen des zweiten Regulierungsorgans (18) mittels des ersten Regulierungsorgans (16) derart zu steuern, dass der Durchsatz des Umlaufs des in den Rückführungskanal (13) strömenden Kraftstoffs vermindert wird.

4. Vorrichtung (10) nach Anspruch 2 oder 3, wobei das erste Regulierungsorgan (16) ein Servoventil ist und das zweite Regulierungsorgan (18) eine Rückführungsklappe ist.

5. Vorrichtung (10) nach einem der Ansprüche 1 bis 4, wobei die Pumpe (12) eine Zentrifugalpumpe mit Beschaufelungskranz ist.

6. Turbinentriebwerk, das mindestens eine Vorrichtung (10) nach einem der vorhergehenden Ansprüche umfasst.

7. Verfahren zur Regulierung des Durchsatzes der Kraftstoffversorgung für ein Turbinentriebwerk, das die Vorrichtung (10) nach einem der Ansprüche 1 bis 5 verwendet, das die folgenden Schritte umfasst:
- Bestimmen des Gasgehalts einer Strömung, die die Pumpe (12) versorgt, in der stromaufwärtigen Leitung (10a) mittels des Phasenmessers (30),
- Regulieren des Öffnungsgrads des Mittels (16, 18) zur Regulierung des Durchsatzes mittels des Rechners (40) in Abhängigkeit von dem im Schritt des Bestimmens bestimmten Gasgehalt in der stromaufwärtigen Leitung (10a).

8. Verfahren nach Anspruch 7, wobei, wenn der Phasenmesser (30) im Schritt des Bestimmens eine Erhöhung der Gasphase feststellt, der Rechner (40) das zumindest partielle Schließen des Mittels (16, 18) zur Regulierung des Durchsatzes derart steuert, dass der Durchsatz des Umlaufs des im Rückführungskanal (13) strömenden Kraftstoffs vermindert wird.

## Claims

1. A device (10) for regulating the fuel supply flow rate for a turbine engine, comprising:
- at least one pump (12),
- an upstream line (10a) leading to the pump (12),
- a downstream line (10b) exiting the pump (12),
- a recirculation duct (13) branched off the downstream line (10b), allowing to collect a certain quantity of fluid in the downstream line (10b) and channel the fluid collected from the downstream line (10b) towards the upstream line (10a),
- a means for regulating flow rate (16, 18) disposed on the recirculation duct (13),
- a phase measurer (30) able to determine the gas content of a two-phase flow disposed in the upstream line (10a), the recirculation duct (13) being connected to the upstream line (10a), downstream of the phase measurer (30),
- a computing unit (40) connected to the phase measurer (30) and to the flow rate regulating means (16, 18), said computing unit (40) being configured to control the flow rate regulating means (16, 18) such as to controla degree of opening of said flow rate regulating means, according to the gas content value in the upstream line (10a) determined by the phase measurer (30).

2. The device (10) according to claim 1, wherein the flow rate regulating means (16, 18) comprises a first regulating member (16) connected to the computing unit (40), and a second regulating member (18) disposed on the recirculation duct (13), the degree of opening of the second regulating member (18) being controlled by the first regulating member (16).

3. The device (10) according to claim 2, wherein, when the gas content value in the upstream line (10a) increases, the computing unit (40) is configured to control the at least partial closing of the second regulating member (18), by means of the first regulating member (16), such as to reduce the circulation flow rate of fuel flowing in the recirculation duct (13).

4. The device (10) according to claim 2 or 3, wherein the first regulating member (16) is a servo valve, and the second regulating member (18) is a recirculation valve.

5. The device (10) according to any one of claims 1 to 4, wherein the pump (12) is a centrifugal pump with an impeller with blading.

6. A turbine engine comprising at least one device (10) according to any one of the preceding claims.

7. A method for regulating the fuel supply flow rate for a turbine engine using the device (10) according to any one of claims 1 to 5, comprising the steps of:
- determining, in the upstream line (10a), the gas content of a flow supplying the pump (12) by means of the phase measurer (30);
- regulating the degree of opening of the flow rate regulating means (16, 18) by means of the computing unit (40) according to the gas content in the upstream line (10a), determined at the determining step.

8. The method according to claim 7, wherein, when the phase measurer (30) detects an increase in the gaseous phase at the determining step, the computing unit (40) controls the at least partial closing of the output regulating means (16, 18) such as to reduce the circulation output of the fuel flowing in the recirculation duct (13).
